(19) Europäisches Patentamt
European Patent Office
Office européen des brevets

(11) **EP 2 719 557 A1**

(12) **EUROPEAN PATENT APPLICATION**

(43) Date of publication:
**16.04.2014 Bulletin 2014/16**

(51) Int Cl.:
***B60G 21/055*** *(2006.01)*

(21) Application number: **12382392.4**

(22) Date of filing: **11.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Edai Technical Unit, A.I.E.
48340 Amorebieta Vizcaya (ES)**

(72) Inventors:
• **Teijeiro Castro, Rafael
48340 Amorebieta (Vizcaya) (ES)**
• **Seras Escolano, Ivan
48340 Amorebieta (Vizcaya) (ES)**

(74) Representative: **Carpintero Lopez, Francisco et al
Herrero & Asociados, S.L.
Alcalá 35
28014 Madrid (ES)**

(54) **Active anti-roll bar**

(57) The present invention relates to an active anti-roll device for automotive vehicles, comprising a stabilizer bar (5) comprising a central part (8) which is articulated in at least two supports (13) to a cradle (12) or to the frame of an automotive vehicle, said central part (8) prolonging beyond each support (13) in a cantilever part (7), each cantilever part (7) being bent into a lever arm (6) connecting at its end, at a connection point (9), with a connection bar (14) which at its opposite end connects with an intermediate element capable of transmitting reaction forces of the stabilizer bar (5) to the wheels of the automotive vehicle, where the device comprises means for modifying the bending and torsional stress generated in the stabilizer bar (5) while driving.

**FIG. 6**

**Description**

Technical Field of the Invention

The present invention has an application in the automotive industry, and more specifically in the field of suspension systems.

Background of the Invention

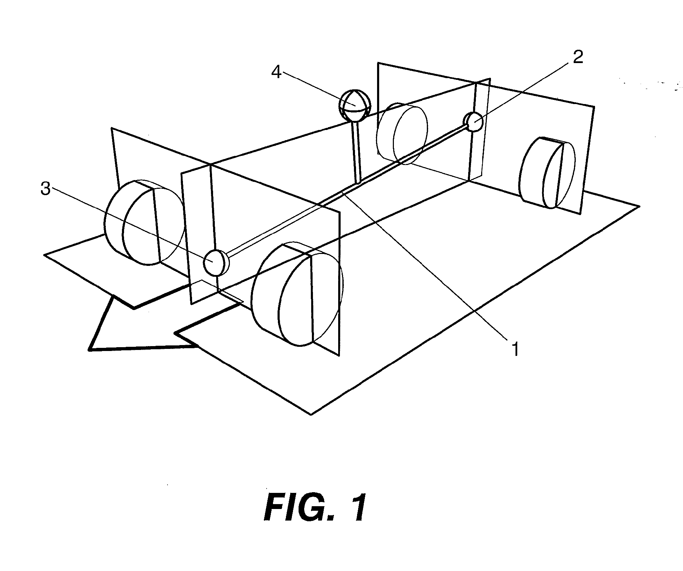

In an automotive vehicle, roll is defined as the rotation experienced by the sprung mass around the roll axis (1) of the vehicle caused by centrifugal force. As can be seen in Figure 1, the roll axis (1) is defined by an imaginary line joining the rear roll center (2) and the front roll center (3), where said centers (2, 3) are defined by the geometry of the automotive vehicle suspension in each case. The center of gravity (4) of the vehicle is in turn located above the roll axis (1), this characteristic being what generates roll when the vehicle is traveling on a curve due to the effect of centrifugal force, which affects the lateral stability of the vehicle.

In the event of this phenomenon, various situations which can occur while driving must be considered. On one hand, while driving around a curve on a road, it is undesirable for the vehicle to tend to lean too much because centrifugal force can cause the loss of road-tire contact of one of the wheels or can even cause the vehicle to flip over. The lean of automotive vehicles when traveling on curves also brings about several drawbacks affecting stability. The actual lean of the vehicle varies the camber angle of the wheels, which means that part of the tread of the tires is not supported on the terrain, such that they work in poor conditions maintaining contact with the pavement with part of the shoulder of the tire. Furthermore, automotive vehicle suspensions do not work optimally in these conditions because the suspensions located on the inner part of curves are extended whereas the suspensions located on the outer part are completely compressed. However, on very irregular terrains it is of interest to make the suspension movement of one wheel independent with respect to the other for correct driving, as occurs in the case of off-road vehicles.

The vehicle roll phenomenon can be reduced by means of stiffening the suspension, with the drawback that comfort is decreased. Completely eliminating vehicle roll also has drawbacks, because said roll gives the driver the feeling of being alert when entering a curve at a high speed, which results in the driver reducing the speed, such that it is a safety measure for driving the automotive vehicle.

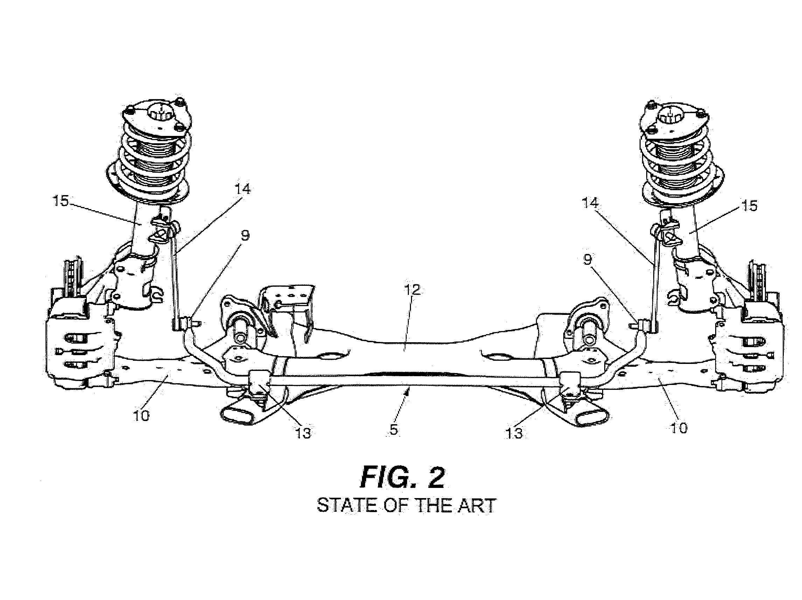

To increase roll stiffness in automotive vehicles today, the suspension incorporates an anti-roll system comprising a stabilizer or torsion bar (5), as can be seen in Figures 2, 3, 4 and 12. The stabilizer bar (5) is attached in its central part (8), which is straight, to the front cradle (12) of the vehicle, generally by means of supports (13) which allow the stabilizer bar (5) to rotate with respect to the cradle (12). Said supports (13) are usually elastic supports to prevent blows and abrupt movements or vibrations from being transmitted to the interior of the vehicle.

The stabilizer bar (5) is connected at its ends to connection bars (14), usually referred to as stabilizer links, by means of the articulation thereof at the connection points (9). Each connection bar (14) is in turn connected, also by means of articulation, to a shock absorber (15) of the vehicle suspension at its opposite end, all this seen in Figure 2.

The stiffness of an automotive vehicle depends on the entire kinematic chain forming the actual vehicle suspension, such as for example the shock absorber, suspension spring, articulations between different moving components, the actual stiffness of the frame, etc. However, the element having the greatest effect on vehicle roll is the stabilizer bar.

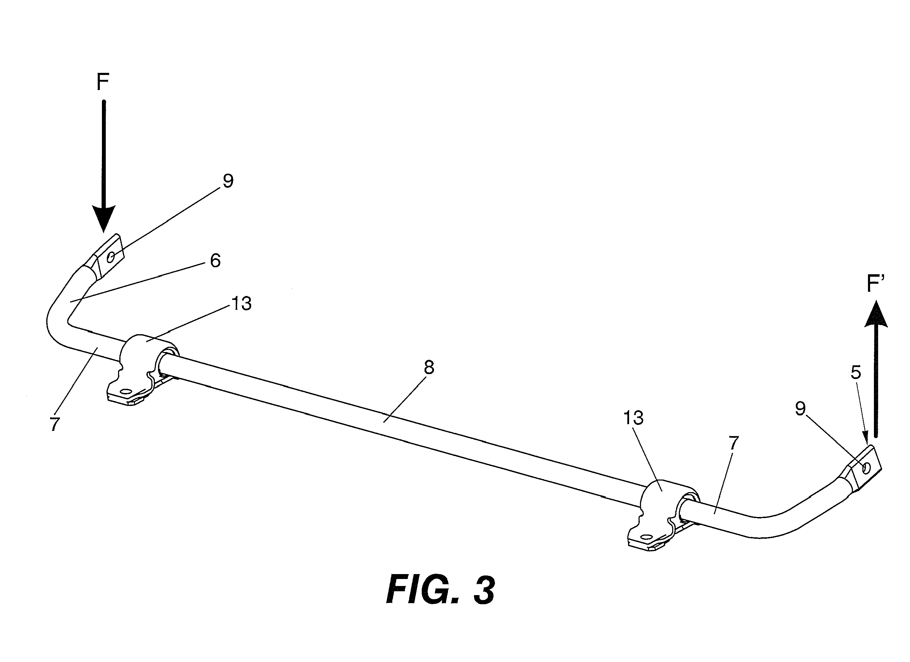

The increase in the stiffness of the stabilizer bar (5) primarily depends on two main characteristics; on one hand it depends on the geometry of the actual stabilizer bar (5) and on the other hand on the mechanical characteristics of the material of the stabilizer bar (5). The geometric characteristics affecting the stiffness of the stabilizer bar (5) are the length between supports (13), which defines the central part (8), also referred to as the active part, the length of the lever arms (6), which is a curved part that can have different configurations, the length of the cantilever part (7) and the geometry of the cross-section of the stabilizer bar (5) in each segment (6, 7, 8). Another characteristic having an effect, though to a lesser extent, are the supports (13) fixing the stabilizer bar (5) to the cradle (12) or to the frame; the stabilizer bar (5) will behave in a more or less stiff manner depending on the stiffness of the supports (13). Each of said parts has been identified in Figures 2 and 3. Suspension roll behavior is usually symmetrical, although asymmetries may arise due to the configuration of the suspension.

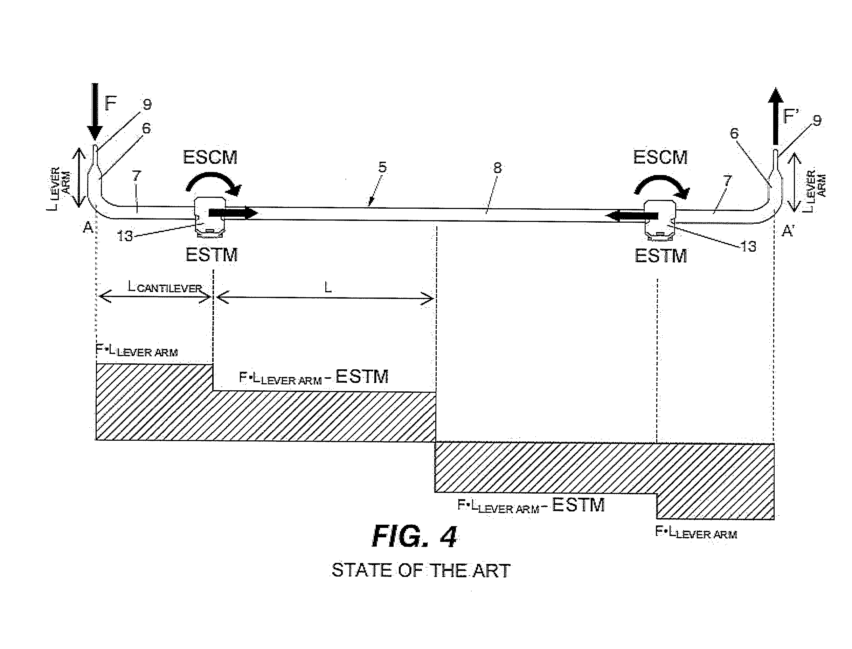

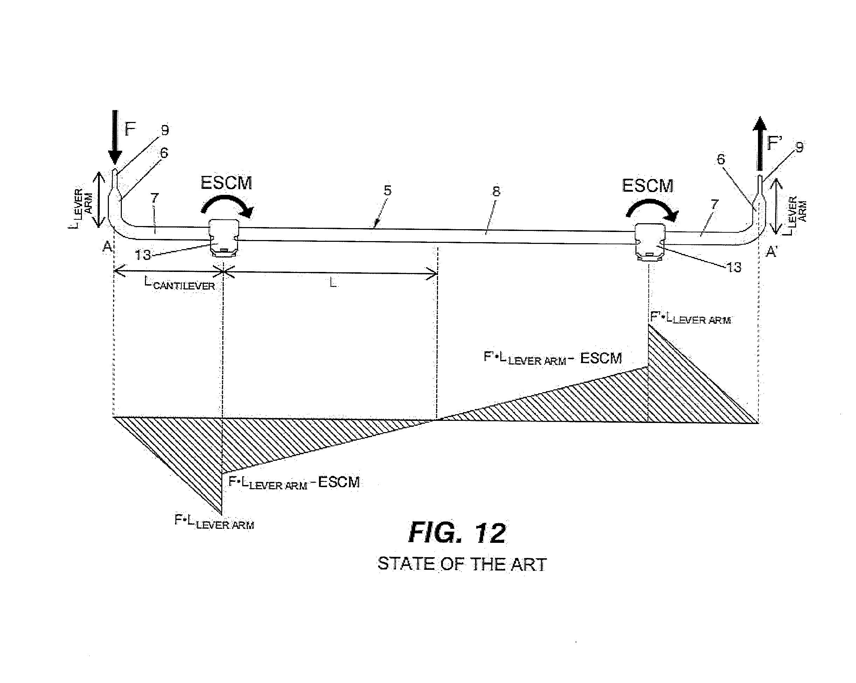

As can be seen in the diagrams of Figures 4 and 12, the stabilizer bar (5) works by torsion and bending. The predominant force is one or the other depending on which part of the stabilizer bar (5) is analyzed. As previously stated in reference to Figure 3, in a stabilizer bar (5) three geometric areas can be distinguished, consisting of the areas corresponding to the ends, which are the lever arms (6), the central part (8) located between the two supports (13), and the cantilever parts (7) which are the prolongation of the central part (8) beyond the supports (13).

For better understanding of the following explanation in reference to Figures 4 and 12 corresponding to a stabilizer bar arrangement according to the state of the art, the general formulation of the bending movement of a cantilever beam and of the rotation caused by torsion is considered:

$$\text{Bending} \quad \rightarrow \quad f = \frac{F \cdot l^3}{3 \cdot E \cdot I}$$

$$\text{Torsion} \quad \rightarrow \quad \theta = \frac{T \cdot l}{I_p \cdot G}$$

where f is the beam bending deflection, F the force exerted at the end of the beam, l the length of the cantilever, E the elastic modulus, I the moment of inertia, $\theta$ the torsional angle of rotation, T the torsional moment, $I_p$ the polar moment of inertia and G the angular elastic modulus. In said Figure 4, ESCM is the elastic support cardinal moment and ESTM is the elastic support torsional moment.

In view of the preceding formulation, in the area corresponding to the lever arms (6) of the stabilizer bar (5) the stress is only a bending stress, the magnitude of said stress depending on the length of said lever arm (6). Bending and torsional stresses, which depend on the length of the cantilever parts (7), in turn coexist in said cantilever parts (7) of the stabilizer bar (5), although the bending is the magnitude that is most affected by the variable of said length, as can be seen in view of the preceding formulas. This does not mean that the predominant stress is bending stress because variables such as the moment of inertia I , the polar moment of inertia $I_p$, the elastic modulus E or the angular elastic modulus G have to be taken into account to enable comparing both bending and torsion magnitudes in order to evaluate which is predominant in each particular case. The predominant stress in the central part (8) of the stabilizer bar (5) is torsional stress, and depending on the stiffness of the supports, a bending stress occurs to a greater or lesser degree, such that if the supports are elastic supports, the effect of the bending is greater the less stiff the supports are, and in contrast, if the supports are stiff supports, bending stress in the central part (8) is less, being able to be nil.

The operation of the anti-roll system described above is as follows: when the automotive vehicle enters a curve, the torsion or stabilizer bar (5) exerts a moment opposite the roll moment of the vehicle, such that it stabilizes the vehicle. Said moment exerted by the stabilizer bar (5) is produced by the reaction to the forces exerted during vehicle roll. The magnitude of the reaction is determined by the geometry and by the material of the stabilizer bar (5). Stabilizer bars (5) used in conventional vehicles today have constant geometry and materials while driving the automotive vehicle, so the force which the stabilizer bar (5) can exert depends only on the degree of roll of the automotive vehicle, such that the greater the roll, the greater the reaction of the stabilizer bar (5). These anti-roll systems have a significant limitation consisting of the impossibility of varying or modifying the stiffness of the torsion bar (5) while driving the vehicle.

For the purpose of overcoming this limitation, there are automotive vehicles today with active anti-roll systems incorporating stabilizer bars in the frame which are formed by two half-bars connected to one another by means of a hydraulic motor, as described in United States patent application no. US-2003/0111816-A1. The effect achieved with these active bar systems is that roll stiffness can be progressively increased. To that end, when the hydraulic motor is inactive, i.e., at rest, the two half-bars can move independently, this being the preferred mode for example for driving situations in which there are obstacles on the road. On the other hand, when the hydraulic motor is active, i.e., when it acts, it exerts the necessary force to connect or join the two half-bars, thus forming a single stiff bar, this being the preferred mode for example when the automotive vehicle traveling on a road enters a curve.

However, it must be considered that this mechanism has a split stabilizer bar, i.e., it can have a roll stiffness of nil value. In addition to its complexity and high cost, being able to have nil stiffness has two huge drawbacks. Firstly, in said situation the stabilizer bar does not transmit forces from one end to the other because there is no connection between both ends and because the clutch is attached to the frame, and secondly the stabilizer bar loses the capability of working as a torsion spring. Compared to this mechanism, when a continuous bar is twisted, it accumulates energy that it is capable of returning as soon as the load causing its torsion is no longer being applied, such that the bar returns to its nominal position. However, if the bar is split this property or capability is lost.

There are also active anti-roll systems like that described in United States patent no. US-7543832-B2, in which the stabilizer bar is split but at the same time conserves the capability of transmitting stresses from one side of the bar to the other. This transmission is done by means of a compression spring. The active character of these anti-roll systems, i.e., the manner in which they achieve a variable stiffness of the stabilizer bar, consists of changing the stiffness of the spring, for which purpose said spring is compressed or released as a function of the stiffness required at all times or in each situation.

However, this active mechanism has the drawback that it causes high friction generated by the contact between a projection and a groove comprised in the device for acting on the spring, such that said projection experiences considerable wear, resulting in the occurrence of unwanted allowances, with the noises and impacts they entail.

Another stabilizer bar having variable stiffness is described in European patent application no. EP-2070743-A1, in which the stiffness is varied by means of the change in orientation of the section in the lever arm of the stabilizer bar.

This device uses two motors which are arranged on the lever arm of the stabilizer bar, i.e., in motion with it, which creates greater inertia for the bar. The variation of stiffness is not that broad because the bar must always conserve a minimum section so that it does not break and a maximum section established by the available space, so the variation of stiffness can only be between a minimum stiffness value and a maximum stiffness value that are very close to one another.

On the other hand, the variation of stiffness is determined by the bending of the lever arm; however, it must be considered that the length of the lever arm of a conventional stabilizer bar is not very long, so the variation of stiffness achieved by means of this device is not really noticeable for driving. Furthermore, depending on the configuration of the fixing of the ball and socket joint used at the end of the lever arm, a very large working space for the ball and socket joint may be required given that it has to make a very wide rotation, which entails a design limitation and drawback.

Description of the Invention

A first aspect of the present invention relates to an active anti-roll device for automotive vehicles, which allows achieving equilibrium in the stiffness of the suspension to achieve optimal adaptation to both driving on a road and to driving on irregular terrains, maintaining a compromise between safety and comfort, all in an economical and simple manner.

The device proposed by the invention comprises a stabilizer bar, also usually referred to as a torsion bar, where said stabilizer bar in turn comprises a straight central part, also referred to as the active part because it is the part working mostly under torsion, which is articulated in at least two supports which can be elastic or completely stiff, attached to a front cradle or to the frame of an automotive vehicle suspension.

The straight central part prolongs beyond each support in a cantilever part, which is generally shorter than the central part, each cantilever part being bent into a lever arm, preferably having dimensions that are comparable to each cantilever part although it can have different curved configurations. Each lever arm is in turn connected at its end with a connection bar, also usually referred to as stabilizer link, by means of the articulation thereof, such that at the opposite end each connection bar is connected with the wheel of the vehicle, by means of the articulation thereof, through an intermediate element capable of transmitting the reaction forces of the stabilizer bar to the wheels, i.e., through the interconnection of at least another part, for example the arm of the suspension or the shock absorber of the automotive vehicle suspension.

According to the invention, the active anti-roll device comprises means for modifying or varying the bending stress generated in the stabilizer bar while driving both in the central part and in the cantilever part of the stabilizer bar. The device of the invention thus allows modifying or varying the stiffness of the stabilizer bar so that it adapts to different driving modes. For example, if sport driving is desired, the stiffness of the stabilizer bar should be high; however, when traveling on rural and irregular terrain, stiffness of the stabilizer bar should be small, i.e., reduced.

The solution proposed by the invention is much simpler than the anti-roll systems of the state of the art because it consists of applying the concept of modifying or varying the bending stress, which can be done, for example, by varying the position of the supports of the stabilizer bar. To that end, the possibility that said at least two supports can be moved according to a direction coinciding with the direction of the actual central part of the stabilizer bar is contemplated, such that the length of the central part of the stabilizer bar can be varied by means of said movement, which thereby allows varying the stiffness of the stabilizer bar as a function of the position of the supports, according to the needs present while driving the automotive vehicle.

Likewise, another already known solution for varying the stiffness of a stabilizer bar consists of applying the concept of modifying or varying the torsional moment with respect to the time, which can be done, for example, by braking the turning motion of the stabilizer bar. To that end a torque or torsional moment is generated which has a direction opposite the torsional moment to which the stabilizer bar is subjected as the result of the actions it receives during conventional operation, i.e., of the actions it receives from the connection bars which are connected to an intermediate element transmitting the reaction forces of the stabilizer bar to the wheels, said intermediate elements in the depicted embodiment being shock absorbers. Stiffness of the stabilizer bar is thereby increased.

The underlying principle in the entire anti-roll system which has an active character is that the ideal situation in an automotive vehicle is being able to vary the stiffness of the torsion bar depending on the driving desired at all times. For sport driving, stiffness of the bar should be high to increase the lateral dynamics of the vehicle; however, for driving on rough terrain or in the mountains, stiffness of the stabilizer bar should be small, i.e. reduced.

The stresses acting on a stabilizer bar of the state of the art as well as the torsional moment diagram and the bending moment diagram thereof, all depicted in Figure 4 and Figure 12 in a theoretical and simplified manner, are explained below.

Figure 12 depicts a bending moment diagram in a stabilizer bar according to the state of the art. In an ideal situation of complete symmetry, the deflection generated in section A and A' due to bending is similar in both sections but with the opposite sign and corresponds to the following expression:

$$\delta_A = \frac{F \cdot L_{cantilever}^2 \cdot (2 \cdot L) + F \cdot L_{cantilever}^3}{3 \cdot E \cdot I} - \frac{F' \cdot L_{cantilever}^2 \cdot (2 \cdot L)}{6 \cdot E \cdot I} - \frac{ESCM \cdot (2 \cdot L) \cdot L_{cantilever}}{3 \cdot E \cdot I}$$
$$+ \frac{ESCM' \cdot (2 \cdot L) \cdot L_{cantilever}}{6 \cdot E \cdot I}$$

As observed in the preceding formula, the longer the cantilever length the greater the deflection, i.e., the greater the deflection, the more stresses the bar absorbs and therefore the force transmitted from one side of the bar to the other will be less, i.e., the stiffness of the stabilizer bar will be less.

Figure 4 depicts a torsional moment diagram in a stabilizer bar according to the state of the art. In an ideal situation of complete symmetry, the turned torsional angle in section A and in section A' is similar but in the opposite direction and is defined by the following expression:

$$\theta_A = \frac{F \cdot L_{lever\,arm} \cdot L_{cantilever} + (F \cdot L_{lever\,arm} - ESTM) \cdot L}{I_p \cdot G}$$

As can be seen in the preceding formulas and considering a usual arrangement in which the stabilizer bar is symmetrical and has a constant cross-section along the entire bar, the turned torsional angle depends on a plurality of variables: on the geometry of the bar, including the lever arm length, the cantilever part length, the total length of the stabilizer bar and the cross-section of the stabilizer bar; said turned torsional angle also depends on the material of the bar, on the type of support of the bar, whether it is elastic to a certain degree or completely stiff, and on the force applied in the lever arms.

In order to understand the concept of stiffness of the stabilizer bar, it is first assumed that the deformation generated at ends A and A' is constant, so for a small cantilever length a greater deformation force is needed than for a long cantilever length. It is therefore determined that stiffness of the stabilizer bar is greater the smaller the cantilever length is. The conclusion is that stiffness of a stabilizer bar of the state of the art, as in the arrangement depicted in Figures 4 and 12, is constant because its geometry, material and the type of supports are also constant.

As mentioned above, the stabilizer bar works in two ways, one way is by torsion and the other by bending. Solutions which act only on the torque to achieve an active stabilizer bar are already known in the current state of the art. However, the solution proposed by the invention allows attenuating or maximizing, as needed for driving, the effect of bending on the stabilizer bar, achieving a variation of stiffness of the stabilizer bar and therefore achieving an active stabilizer bar.

Considering the deflection and turned angle formulation, and taking into account the geometry of the stabilizer bar, for one and the same magnitude of movement of points A and A' and a fixed length of the lever arms, if the supports are moved longitudinally along the straight part of the stabilizer bar the bar lengths of the cantilever part and of the central part are modified, whereby achieving the following effects:

By bringing both supports closer to one another, i.e., shortening the central part, the cantilever part of the stabilizer bar increases and therefore less force is necessary for generating that deflection according to the deflection formulation. Since less force is necessary, the torsional rotation generated by said force is also less according to the turned angle formulation. As a result, the torsional moment transmitted by the stabilizer bar is less, i.e., stiffness of said stabilizer bar is reduced.

By moving both supports away from one another, i.e., elongating the central part, the cantilever part of the stabilizer bar decreases and therefore greater force is necessary for generating that deflection according to the deflection formulation. Since greater force is necessary, the torsional rotation generated by said force is also greater according to the turned angle formulation. As a result, the torsional moment transmitted by the stabilizer bar is greater, i.e., stiffness of said stabilizer bar is increased.

A second aspect of the invention relates to an automotive vehicle comprising an active anti-roll device such as that described above.

A third aspect of the invention relates to a method for modifying the behavior of an automotive vehicle suspension with respect to roll. To that end, the method comprises modifying the bending and torsional stresses of a stabilizer bar while driving an automotive vehicle.

The possibility of the method comprising the supports being moved with respect to a direction coinciding with the direction of the actual central part of the stabilizer bar is contemplated, such that the length of the central part of the stabilizer bar is varied by means of said movement. The anti-roll device can thus be adjusted for sport driving, in which the torsional stiffness of the bar has to be high, arranging the supports at a maximum separation, or it can be adjusted for driving on rural and irregular terrain, in which the stiffness of the stabilizer bar has to be small, arranging the supports at a minimum separation.

Description of the Drawings

To complement the description that is being made and for the purpose of aiding to better understand the features of the invention according to a preferred practical embodiment thereof, a set of drawings is attached as an integral part of said description, in which the following has been depicted with an illustrative and non-limiting character:

Figure 1 shows a schematic perspective view of the roll axis of an automotive vehicle, defined from its center of gravity and the front and rear roll centers, which can be distinguished by the depiction of the forward movement direction of the vehicle by means of an arrow.

Figure 2 shows a schematic front perspective view of a front suspension of the state of the art, in which the arrangement of a conventional stabilizer bar as well as the usual elements such as shock absorbers, arms of the suspension and supports of the suspension bar can be seen.

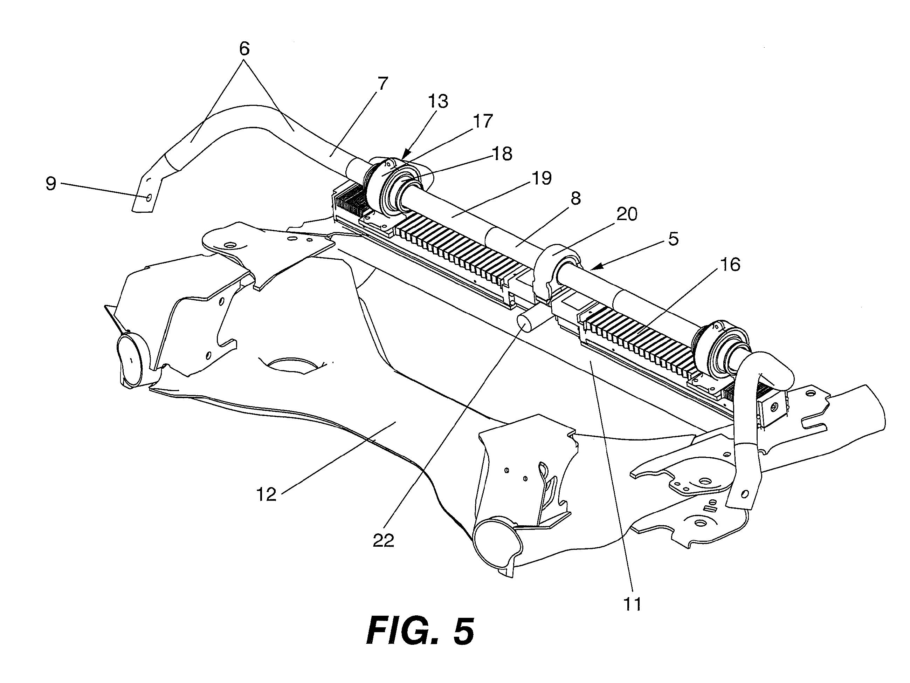

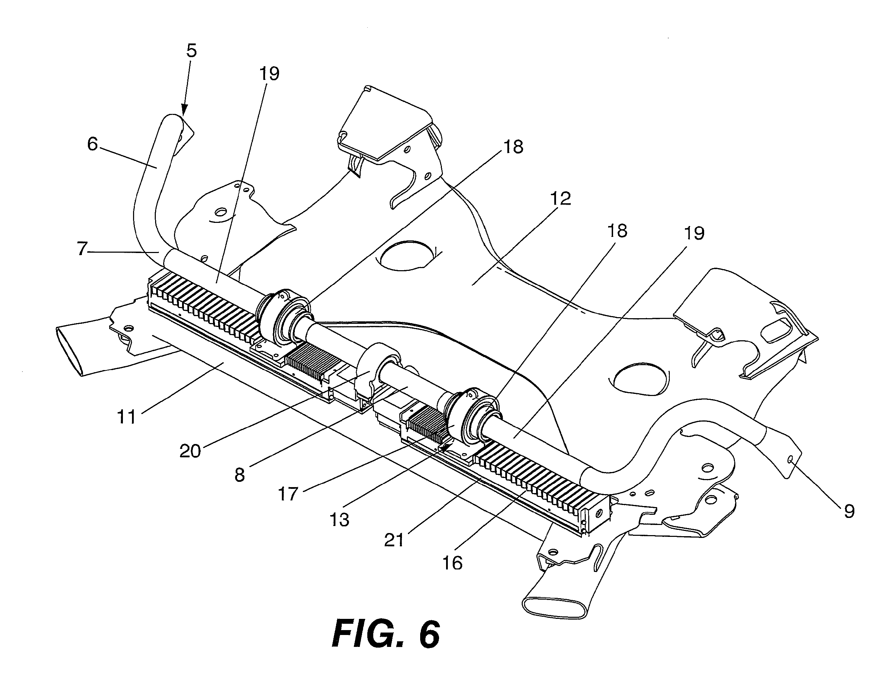

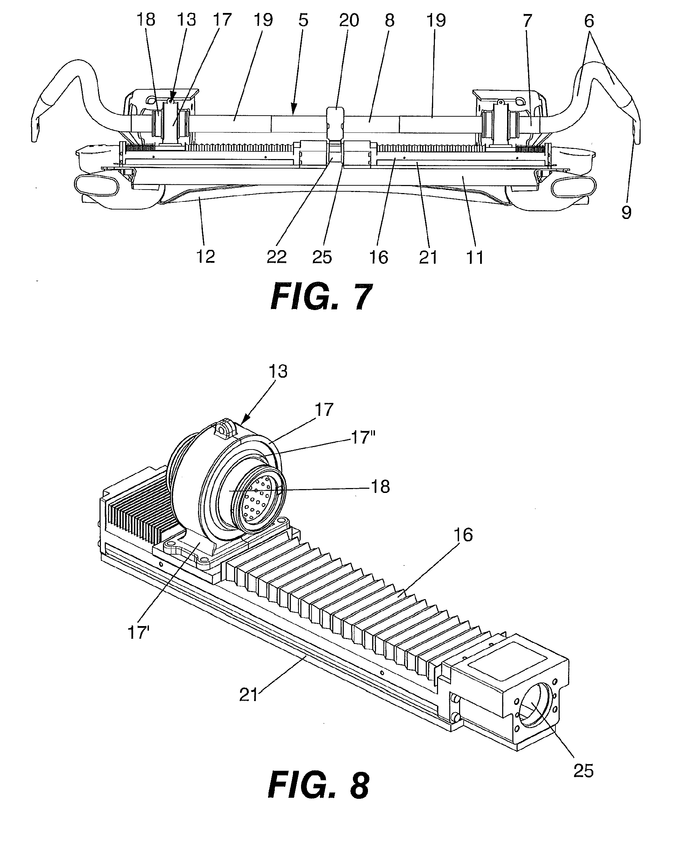

Figure 3 shows a schematic perspective view of a stabilizer bar of the state of the art and its supports on which the different segments forming said stabilizer bar are distinguished, i.e., the lever arms located at the ends, the cantilever part located between the supports and lever arms, and finally the central part located between the supports, said areas also correspond to the stabilizer bar comprised by the invention depicted in Figures 5 to 8.

Figure 4 shows a torsional moment diagram comprising the torsional moments to which the arrangement of the state of the art depicted in Figures 2 and 3 is subjected, and also schematically shows an elevational view in the figure itself.

Figure 5 shows a perspective view of an embodiment of the device of the invention mounted in a front cradle of an automotive vehicle in maximum stiffness operating position.

Figure 6 shows a perspective view of the embodiment depicted in Figure 5 from an opposite viewpoint in a minimum stiffness operating position.

Figure 7 shows an elevational view of the device depicted in Figures 5 and 6 in the position of Figure 5.

Figure 8 shows a perspective view of a support comprised in the device depicted in Figures 5 to 7 located on a motorized linear guide.

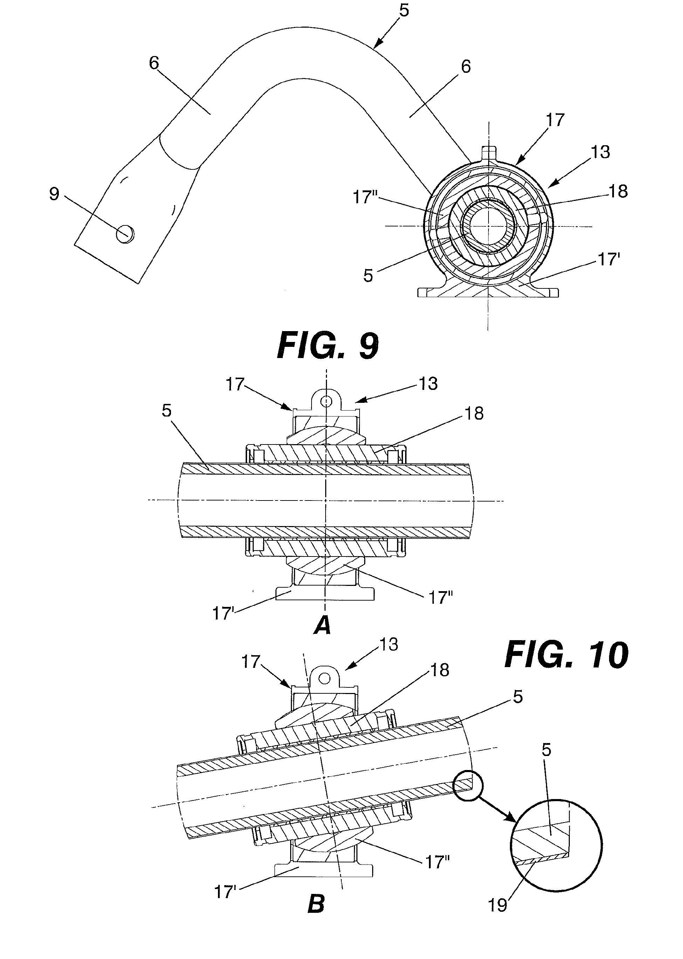

Figure 9 shows a cross-section view of a support of the device of the invention without being mounted on a cradle or frame of the automobile.

Figure 10 shows two longitudinal section views of a support of the device of the invention, where the stabilizer bar can be seen in a straight position, view A, and in a rotated position, view B, in which the relative turning motion between the moving part and the fixed part of the spherical bearing is seen. An enlarged detail in which the arrangement of a bushing between the stabilizer bar and the sliding bushing can be seen has also been depicted.

Figure 11 shows a perspective view of an embodiment variant of the device of the invention, in which the supports are located on a runner sliding on a linear guide rather than being located on a motorized linear guide, as in the embodiment depicted in the remaining figures; the device having been depicted in the maximum stiffness operating position.

Figure 12 shows a bending moment diagram in a stabilizer bar according to the state of the art.

Preferred Embodiment of the Invention

In view of the mentioned drawings, it can be observed how in one of the possible embodiments of the invention the active anti-roll device proposed by the invention comprises a stabilizer bar (5) comprising a central part (8) which is articulated in two supports (13) to a cradle (12) or to the frame of the automotive vehicle, said cradle (12) also being connected with the arms of the suspension (10). The central part (8) prolongs beyond each support (13) in a cantilever part (7), which is shorter than the central part (8), each cantilever part (7) being bent into a lever arm (6) with an intermediate bend. Each lever arm (6) is in turn connected at its end, at a connection point (9), with a connection bar (14) which in turn connects with another intermediate element, a shock absorber (15) of the suspension in the depicted embodiment, and said intermediate element in turn connects with a wheel of the automotive vehicle.

The active anti-roll device comprises means for modifying or varying the bending and torsional stress generated in the stabilizer bar (5) while driving.

The modification or variation of the bending and torsional stress is performed by varying the position of the supports (13) of the stabilizer bar (5). To that end, the two supports (13) can be moved according to a direction coinciding with the direction of the actual central part (8) of the stabilizer bar (5), such that the length of the central part (8) of the stabilizer bar (5) can be varied by means of said movement, which thereby allows varying the stiffness of the stabilizer bar (5) as a function of the position of the supports (13), according to the needs present while driving the automotive vehicle.

The solution for varying the distance separating both supports (13) proposed by the invention consists of each support (13) being fixed on a motorized linear guide (16), also referred to as linear translational stage or element, which is operated by at least one centrally arranged motor (22), such that each motorized linear guide (16) has a coupling to the motor (25). Achieving the movement of the supports (13) is therefore done by means of a linear movement element.

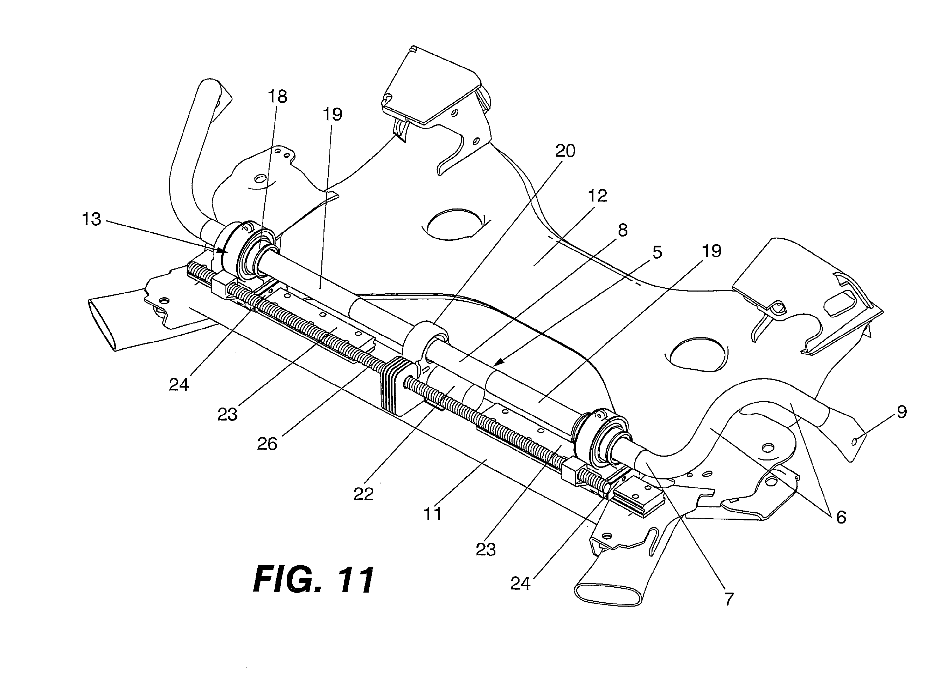

According to the embodiment variant depicted in Figure 11, each support (13) is fixed on a runner (24) the position of which can be fixed with respect to a linear guide (23), also referred to as a translational element or track, on which said runner (24) can slide, for example in a manner controlled by means of a drive device (22) coupled to a spindle (26).

To achieve linear movement of the supports (13) in either of the two embodiments, said linear guides (16, 23) are supported by a support element (11) which is fixed to the cradle (2) or to the frame of the automotive vehicle. In the specific case of the linear guide (23), said linear guide (23) is integrally attached to the cradle (12) of the vehicle and the runner (24) is integrally attached to the support (13), such that the assembly formed by runner (24) and support (13) can be moved along the linear guide (23), which is arranged such that the longitudinal axis of the linear guide (23) is parallel to the longitudinal axis of the central part (8) of the stabilizer bar (5), i.e., to the actual axis of said central part (8).

According to a preferred embodiment, it is also contemplated that there is an elastic element (21) between each linear guide (16, 23) and the support element (11) to absorb vibrations during the operation of the device and to prevent their transmission to the interior of the automotive vehicle.

Each support (13) also comprises a spherical bearing (17), also referred to as a ball and socket joint, which in turn comprises a fixed part (17') which is integral with the linear guide (16, 23) and a moving part (17") which can rotate with respect to the fixed part (17'), giving each support a spherical degree of freedom. Each support (13) in turn comprises a sliding bushing (18), also referred to as a translational joint since it gives each support (13) a translational degree of freedom, located inside the moving part (17") of the spherical bearing (17), where said sliding bushing (18) allows the movement of the stabilizer bar (5) with respect to the support (13). According to a preferred embodiment, a bushing (19) on which the sliding bushing (18) slides is arranged between the stabilizer bar (5) and said sliding bushing (18).

The supports are mostly elastic supports in the current state of the art, however special supports such as those described have to be used for the device of the invention because the support (13) must be allowed to slide along the stabilizer bar (5), and the cardinal rotation made in the supports (13) due to the bending of the central part (8) must additionally be allowed. To solve this problem the invention proposes a stiff support (13) which is a spherical rolling bearing and at the same time allows translation on the outside of the stabilizer bar (5). Since it is completely stiff it transmits vibrations to the frame of the vehicle, generating uncomfortable driving and being able to generate noises. To prevent this, the elastic element (21) is placed between the linear guides (16, 23) and the cradle (12) of the vehicle.

The anti-roll device of the invention also comprises at least one intermediate, preferably elastic, fixed support (20) arranged on the support element (11) on which the stabilizer bar (5) rests such that it prevents its movement, i.e., its translational movement, according to the direction of the central part (8) of the stabilizer bar (5). If it were not for said intermediate fixed support (20), the stabilizer bar (5) would have a longitudinal degree of freedom. This degree of freedom is eliminated by means of placing the intermediate fixed support (20) joining the stabilizer bar (5) and the cradle (12) or sub-frame of the vehicle, which prevents the longitudinal movement of the bar (5) with respect to the cradle (12). The intermediate fixed support (20) is preferably arranged in the center of the stabilizer bar (5) so that it affects neither torsion nor bending in the central part (8) of the stabilizer bar (5).

In view of this description and set of drawings, the person skilled in the art will understand that the embodiments of the invention that have been described can be combined in many ways within the object of the invention. The invention has been described according to several preferred embodiments thereof, but for the person skilled in the art it will be evident that many variations can be made in said preferred embodiments without exceeding the object of the claimed invention.

## Claims

1. Active anti-roll device for automotive vehicles, comprising a stabilizer bar (5) comprising a central part (8) which is articulated in at least two supports (13) to a cradle (12) or to the frame of an automotive vehicle, said central part (8) prolonging beyond each support (13) in a cantilever part (7), each cantilever part (7) being bent into a lever arm (6) connecting at its end, at a connection point (9), with a connection bar (14) which at its opposite end connects with an intermediate element capable of transmitting reaction forces of the stabilizer bar (5) to the wheels of the automotive vehicle, **characterized in that** the device comprises means for modifying the bending and torsional stress generated in the stabilizer bar (5) while driving.

2. Active anti-roll device according to claim 1, wherein said at least two supports (13) can be moved according to a direction coinciding with the direction of the actual central part (8) of the stabilizer bar (5), such that the length of the central part (8) of the stabilizer bar (5) can be varied by means of said movement.

3. Active anti-roll device according to claim 2, wherein each support (13) is fixed on a motorized linear guide (16) which is actuated by at least one motor (22).

4. Active anti-roll device according to claim 2, wherein each support (13) is fixed on a runner (24) the position of which can be fixed with respect to a linear guide (23) on which said runner (24) can slide.

5. Active anti-roll device according to any of claims 3 and 4, wherein the translational elements (16, 23) are supported by a support element (11) which is fixed to the cradle (2) or to the frame of the automotive vehicle.

6. Active anti-roll device according to claim 5, wherein there is an elastic element (21) between each linear guide (16, 23) and the support element (11) to absorb vibrations.

7. Active anti-roll device according to any of the preceding claims, wherein each support (13) comprises a spherical bearing (17) which in turn comprises a fixed part (17') and a moving part (17") which can rotate with respect to the fixed part (17'), where each support (13) comprises a sliding bushing (18), located inside the moving part (17") of the spherical bearing (17), where said sliding bushing (18) allows the movement of the support (13) with respect to the stabilizer bar (5).

8. Active anti-roll device according to any of the preceding claims, comprising at least one intermediate fixed support (20) on which the stabilizer bar (5) rests such that it prevents its movement according to the direction of the central part (8) of the stabilizer bar (5).

9. Automotive vehicle comprising an anti-roll device according to any of claims 1 to 8.

10. Method for modifying the behavior of an automotive vehicle suspension with respect to roll, **characterized in that** it comprises modifying the bending and torsional stress generated in a stabilizer bar (5) of an anti-roll device of the automotive vehicle while driving, the method comprising moving the supports (13) with respect to a direction coinciding with the direction of the actual central part (8) of the stabilizer bar (5), such that the length of the central part (8) of the stabilizer bar (5) is varied by means of said movement, achieving variation of stiffness of the stabilizer bar.

**FIG. 1**

**FIG. 2**

STATE OF THE ART

**FIG. 3**

**FIG. 4**
STATE OF THE ART

**FIG. 5**

EP 2 719 557 A1

**FIG. 6**

**FIG. 7**

**FIG. 8**

**FIG. 9**

*A*

**FIG. 10**

*B*

**FIG. 11**

EP 2 719 557 A1

**FIG. 12**

STATE OF THE ART

EP 2 719 557 A1

Europäisches
Patentamt

European
Patent Office

Office européen
des brevets

## EUROPEAN SEARCH REPORT

Application Number

EP 12 38 2392

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 269 747 A (FORGE CHARLES O)<br>30 August 1966 (1966-08-30)<br>* the whole document * | 1-10 | INV.<br>B60G21/055 |
| X,D | EP 2 070 743 A1 (JTEKT CORP [JP])<br>17 June 2009 (2009-06-17)<br>* the whole document * | 1,9 | |
| X | JP 2000 203232 A (SAKUGI SADAO)<br>25 July 2000 (2000-07-25)<br>* the whole document * | 1,9 | |
| X | GB 1 090 738 A (ALBERT C SMITH)<br>15 November 1967 (1967-11-15)<br>* the whole document * | 1-10 | |
| X | FR 1 415 297 A (ALBERT SMITH)<br>22 October 1965 (1965-10-22)<br>* the whole document * | 1-10 | |
| X | FR 2 874 861 A1 (PEUGEOT CITROEN AUTOMOBILES SA [FR])<br>10 March 2006 (2006-03-10)<br>* the whole document * | 1-10 | TECHNICAL FIELDS SEARCHED (IPC)<br><br>B60G |

The present search report has been drawn up for all claims

| Place of search | Date of completion of the search | Examiner |
|---|---|---|
| The Hague | 8 March 2013 | Savelon, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 12 38 2392

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2013

| Patent document cited in search report | | Publication date | Patent family member(s) | | Publication date |
|---|---|---|---|---|---|
| US 3269747 | A | 30-08-1966 | NONE | | |
| EP 2070743 | A1 | 17-06-2009 | EP<br>US<br>WO | 2070743 A1<br>2010013175 A1<br>2008041727 A1 | 17-06-2009<br>21-01-2010<br>10-04-2008 |
| JP 2000203232 | A | 25-07-2000 | NONE | | |
| GB 1090738 | A | 15-11-1967 | NONE | | |
| FR 1415297 | A | 22-10-1965 | NONE | | |
| FR 2874861 | A1 | 10-03-2006 | NONE | | |

EPO FORM P0459

For more details about this annex : see Official Journal of the European Patent Office, No. 12/82

**EP 2 719 557 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030111816 A1
- US 7543832 B2

- EP 2070743 A1